# EUROPEAN PATENT APPLICATION

(11) **EP 4 845 128 A1**
(43) Date of publication of application: **25.11.2026**
(21) Application number: 24923462.6
(22) Date of filing: 19.11.2024
(51) Int. Cl.: H04L 69/06

(54) **MESSAGE TRANSMISSION METHOD, APPARATUS AND SYSTEM**

(30) Priority: 05.02.2024 CN 202410163719
(71) Applicant: Huawei Technologies Co., Ltd., Shenzhen, Guangdong 518129 (CN)
(72) Inventor: CHU, Bosen, Shenzhen, Guangdong 518129 (CN)
(74) Representative: Huawei European IPR
(86) International application number: PCT/CN2024/132967
(87) International publication number: WO 2025/167260

(57) **Abstract**

This application discloses a packet transmission method, apparatus, and system, and relates to the field of communication technologies. The method includes: A transmit end allocates a same sequence number to a to-be-transmitted packet and at least one duplicate packet of the to-be-transmitted packet, and sends the to-be-transmitted packet and the at least one duplicate packet of the to-be-transmitted packet through different transmission links. In the to-be-transmitted packet and the at least one duplicate packet of the to-be-transmitted packet, a length of a field used for carrying the sequence number is greater than 2 bytes, and the byte is used for deduplication when the to-be-transmitted packet and the at least one duplicate packet of the to-be-transmitted packet are received. According to the method, when packets are transmitted by using a multi-fed and selective receiving technology, a failure to deduplicate received packets can be avoided.

## Description

This application claims priority to Chinese Patent Application No. 202410163719.0, filed with the China National Intellectual Property Administration on February 5, 2024 and entitled "PACKET TRANSMISSION METHOD, APPARATUS, AND SYSTEM", which is incorporated herein by reference in its entirety.

### TECHNICAL FIELD

This application relates to the field of communication technologies, and in particular, to a packet transmission method, apparatus, and system.

### BACKGROUND

To effectively improve reliability of packet transmission, a dual-fed and selective receiving technology can be used to transmit packet flows. A basic principle of the dual-fed and selective receiving technology is as follows. A transmit end duplicates a to-be-transmitted packet, and sends two identical packets through a dual-transmit port of the transmit end. After the two packets arrive at a receive end through different transmission paths, the receive end normally processes the first received packet, and discards the duplicate packet subsequently received.

### SUMMARY

This application provides a packet transmission method, apparatus, and system. According to the method, when packets are transmitted by using a multi-fed and selective receiving technology, a failure to deduplicate received packets can be avoided. In this application, methods and related possible designs that are mentioned in summary and methods and apparatuses for implementing some or all of operations of the methods that are mentioned in the embodiments are mainly applied to a two-party selective receiving scenario in which a high-availability seamless redundancy (high-availability seamless redundancy, HSR) protocol technology and a parallel redundancy protocol (parallel redundancy protocol, PRP) technology are used. According to this application, a problem that packets cannot be normally deduplicated because a deduplication flow table ages excessively early due to limited address space (0 to 65535) of sequence numbers for HSR packets or PRP packets, or sequence numbers cannot be normally allocated to new traffic because the aging is excessively late can be resolved.

The technical solutions provided in this application are as follows.

According to a first aspect, this application provides a packet transmission method. The method is applied to a transmit end, and the method includes: allocating a same sequence number to a to-be-transmitted packet and at least one duplicate packet of the to-be-transmitted packet, and sending the to-be-transmitted packet and the at least one duplicate packet of the to-be-transmitted packet through different transmission links. In the to-be-transmitted packet and the at least one duplicate packet of the to-be-transmitted packet, a length of a field used for carrying the sequence number is greater than 2 bytes (bytes).

Compared with a 2-byte sequence number (sequence number, SeqNr) field that is used for carrying a sequence number and that is set in an HSR protocol and/or PRP defined in an international electrotechnical commission (international electrotechnical commission, IEC) standard 62439-3 (where for ease of description, the HSR protocol and/or PRP defined in the ICE standard 62439-3 below is briefly referred to as the HSR protocol and/or PRP), a length of a field provided according to the method of this application for carrying the sequence number is greater than 2 bytes. In a packet, a length of a field used for carrying the sequence number is increased, to increase maximum aging time set for the sequence number, thereby avoiding a case in which a receive end cannot deduplicate received packets due to short aging time, and avoiding a waste of resources at the receive end.

In a possible design manner, the field used for carrying the sequence number includes an extended sequence number (extended sequence number, SeqNr-Ext) field and a 2-byte SeqNr field in a high-availability seamless redundancy tag (HSR TAG) field or a parallel redundancy protocol-redundancy control trailer (PRP-redundancy control trailer, PRP-RCT) field defined in the IEC standard 62439-3. According to this possible design, the HSR TAG field/PRP-RCT field defined in the current standard can be extended, to obtain the field provided in this application, used for carrying the sequence number.

In another possible design manner, a decoding order of the SeqNr field precedes that of the SeqNr-Ext field, the SeqNr-Ext field is used for carrying a most significant byte of the sequence number, and the SeqNr field is used for carrying a least significant byte of the sequence number. In this possible design, when each most significant byte of the sequence number carried in the SeqNr-Ext field in the packet is 0, a device that implements the HSR protocol and/or the PRP defined in the IEC standard 62439-3 can identify and process the packet. In other words, the method provided in this application is compatible with the current HSR protocol and/or PRP under a specific condition.

In another possible design manner, when in the method, two-party selective receiving is performed based on an HSR technology, the to-be-transmitted packet and the at least one duplicate packet of the to-be-transmitted packet each include an HSR TAG field in the HSR protocol, and the HSR TAG field includes the SeqNr-Ext field and the SeqNr field defined in the standard.

In another possible design manner, when in the method, two-party selective receiving is performed based on a PRP technology, the to-be-transmitted packet and the at least one duplicate packet of the to-be-transmitted packet each include a PRP-RCT field in PRP, and the PRP-RCT field includes the SeqNr-Ext field and the SeqNr field defined in the standard.

According to the foregoing two possible designs, invention objectives of the solutions of this application can be achieved when dual-fed and selective receiving is performed based on the HSR technology and/or the PRP technology.

In another possible design manner, the transmit end is a doubly attached node (doubly attached node, DAN) implementing an HSR protocol and/or PRP or a redundancy box (redundancy box, REDBOX). The DAN implementing the HSR protocol is denoted as DANH (doubly attached node implementing HSR), and the DAN implementing PRP is denoted as DANP (doubly attached node implementing PRP).

According to a second aspect, this application provides a packet transmission method. The method is applied to a receive end, and the method includes: receiving a first packet including a sequence number; and processing the first packet when the first packet is a packet received for the first time and including the sequence number. In the first packet, a length of a field used for carrying the sequence number is greater than 2 bytes.

In a possible design manner, after the receiving the first packet, the method further includes: receiving a second packet; and discarding the second packet when the second packet includes the sequence number carried in the first packet.

In another possible design manner, the field used for carrying the sequence number includes a SeqNr-Ext field and a 2-byte SeqNr field in an HSR TAG field or a PRP-RCT field defined in the IEC standard 62439-3.

In another possible design manner, a decoding order of the SeqNr field precedes that of the SeqNr-Ext field, the SeqNr-Ext field is used for carrying a most significant byte of the sequence number, and the SeqNr field is used for carrying a least significant byte of the sequence number.

In another possible design manner, when in the method, two-party selective receiving is performed based on an HSR technology, the first packet and the second packet each include an HSR TAG field in an HSR protocol, and the HSR TAG field includes the SeqNr-Ext field and the SeqNr field defined in the standard.

In another possible design manner, when in the method, two-party selective receiving is performed based on a PRP technology, the first packet and the second packet each include a PRP-RCT field in PRP, and the PRP-RCT field includes the SeqNr-Ext field and the SeqNr field defined in the standard.

In another possible design manner, the receive end is a doubly attached node implementing an HSR protocol and/or PRP (such as a DANH and a DANP) or a REDBOX.

According to a third aspect, this application provides a packet transmission apparatus. The packet transmission apparatus is configured to perform the method provided in the first aspect. In this application, the packet transmission apparatus may be divided into functional modules according to the method provided in the first aspect. For example, each functional module may be obtained through division based on each corresponding function, or two or more functions may be integrated into one processing module. For example, in this application, the packet transmission apparatus may be divided into a processing unit, a sending unit, and the like based on functions. For descriptions of possible technical solutions and beneficial effects performed by the functional modules obtained through division, refer to the solutions provided in the first aspect and any possible design manner of the first aspect. Details are not described herein again.

According to a fourth aspect, this application provides a packet transmission apparatus. The packet transmission apparatus is configured to perform the method provided in the second aspect. In this application, the packet transmission apparatus may be divided into functional modules according to the method provided in the second aspect. For example, each functional module may be obtained through division based on each corresponding function, or two or more functions may be integrated into one processing module. For example, in this application, the packet transmission apparatus may be divided into a receiving unit, a processing unit, and the like based on functions. For descriptions of possible technical solutions and beneficial effects performed by the functional modules obtained through division, refer to the solutions provided in the second aspect and any possible design manner of the second aspect. Details are not described herein again.

According to a fifth aspect, this application provides a packet transmission apparatus. The packet transmission apparatus includes a memory, a network interface, and one or more processors. The one or more processors receive or send data through the network interface. The one or more processors are configured to read program instructions stored in the memory, to perform the method according to any one of the first aspect or the possible design manners of the first aspect, or perform the method according to any one of the second aspect or the possible design manners of the second aspect.

The packet transmission apparatus according to the third aspect, the fourth aspect, or the fifth aspect may be, for example, a terminal-side device that supports a multi-fed and selective receiving technology, for example, a machine tool, a mechanical arm, or an industrial control device in an industrial scenario. Alternatively, the packet transmission apparatus may be a proxy device of a terminal-side device, and the proxy device supports a multi-fed and selective receiving technology, to perform dual-fed and selective receiving on a packet sent and/or received by the terminal-side device. Alternatively, the packet transmission apparatus may be a component, for example, a board or a line card, in a terminal-side device/a proxy device of the terminal-side device that supports a multi-fed and selective receiving technology. Alternatively, the packet transmission apparatus may be a chip configured to implement some or all operations in the method according to any one of the foregoing aspects and any possible design. In a possible design, the packet transmission apparatus is used as a DAN node implementing an HSR protocol or PRP or a REDBOX.

According to a sixth aspect, this application provides a packet transmission system. The system includes a transmit end and a receive end. The transmit end is configured to perform the method according to any one of the first aspect and the possible design manners of the first aspect, and the receive end is configured to perform the method according to any one of the second aspect and the possible design manners of the second aspect. In a specific design, the transmit end may be, for example, the packet transmission apparatus according to the third aspect or the fifth aspect, and the receive end is, for example, the packet transmission apparatus according to the fourth aspect or the fifth aspect.

According to a seventh aspect, this application provides a computer-readable storage medium. The computer-readable storage medium is a non-volatile computer-readable storage medium. The computer-readable storage medium includes computer program instructions. When the computer program instructions are executed by a compute device or a processor, the compute device or the processor performs the method according to any one of the first aspect and the possible design manners of the first aspect, or performs the method according to any one of the second aspect and the possible design manners of the second aspect.

According to an eighth aspect, this application provides a computer program product including instructions. When the instructions are run by a compute device or a processor, the compute device or the processor is caused to perform the method according to any one of the first aspect and the possible design manners of the first aspect, or perform the method according to any one of the second aspect and the possible design manners of the second aspect.

It may be understood that any packet transmission apparatus, the packet transmission system, the computer-readable storage medium, the computer program product, and the like provided above may be used in the corresponding method and any possible design provided above. Therefore, for beneficial effects that can be achieved by the packet transmission apparatus, the packet transmission system, the computer-readable storage medium, and the computer program product, refer to beneficial effects in the corresponding method. Details are not described herein again.

In this application, names of the packet transmission apparatus, the packet transmission system, and the like constitute no limitation on devices or functional modules. In actual implementation, these devices or functional modules may appear with other names (such as a communication apparatus, a communication device, and a communication system). The devices or functional modules are within the protection scope of this application provided that functions of the devices or functional modules are similar to those in this application.

### BRIEF DESCRIPTION OF DRAWINGS

FIG. 1 is a diagram of a dual-fed and selective receiving process;
FIG. 2a is a diagram of transmitting a packet by using an HSR network;
FIG. 2b is a diagram of an HSR packet;
FIG. 3a is a diagram of transmitting a packet according to PRP;
FIG. 3b is a diagram of an PRP packet;
FIG. 4 is a schematic flowchart of a packet transmission method according to an embodiment of this application;
FIG. 5a to FIG. 5c each are a diagram of a format of a packet before and after addition of an HSR TAG field according to an embodiment of this application;
FIG. 6a and FIG. 6b each are a diagram of another format of a packet before and after addition of an HSR TAG field according to an embodiment of this application;
FIG. 7a and FIG. 7b each are a diagram of a format of a packet before and after addition of a PRP-RCT field according to an embodiment of this application;
FIG. 8a and FIG. 8b each are a diagram of another format of a packet before and after addition of a PRP-RCT field according to an embodiment of this application;
FIG. 9 is a diagram of a structure of a packet transmission apparatus according to an embodiment of this application;
FIG. 10 is a diagram of a structure of another packet transmission apparatus according to an embodiment of this application; and
FIG. 11 is a diagram of a structure of a packet transmission device according to an embodiment of this application.

### DESCRIPTION OF EMBODIMENTS

To make the objectives, technical solutions, and advantages of this application clearer, the following further describes implementations of this application in detail with reference to the accompanying drawings.

For ease of understanding, the following first explains technologies and background in embodiments of this application.

### (1) Dual-fed and selective receiving

A dual-fed and selective receiving technology is used to improve reliability of packet transmission, to reduce a transmission delay caused by packet retransmission. The dual-fed and selective receiving technology can be applied to any service scenario in which reliability of packet transmission needs to be improved, for example, applied to real-time service data exchange in scenarios such as logistics, medical care, and industry. In embodiments of this application, a network in which packets are transmitted by using the dual-fed and selective receiving technology is denoted as a dual-fed and selective receiving network.

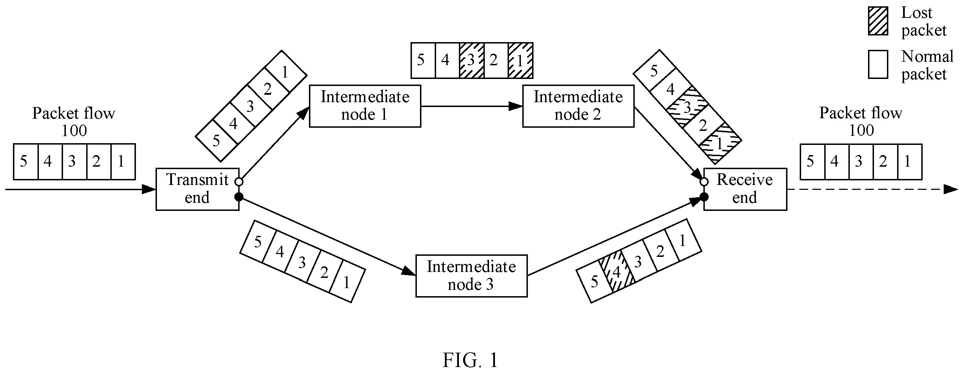

FIG. 1 is a diagram of a dual-fed and selective receiving process. As shown in FIG. 1, a packet flow 100 includes packets numbered 1, 2, 3, 4, and 5. At a transmit end of the dual-fed and selective receiving network shown in FIG. 1, when the transmit end determines that the packet flow 100 needs to be transmitted through dual-fed and selective receiving, the transmit end duplicates packets in the packet flow 100 to obtain duplicate packets, adds a same sequence number to the packets in the packet flow 100 and the duplicate packets, then transmits the packets in the packet flow 100 through a transmission link 1 passing through an intermediate node 1 and an intermediate node 2, and transmits the duplicate packets of the packets in the packet flow 100 through a transmission link 2 passing through an intermediate node 3. At a receive end of the dual-fed and selective receiving network shown in FIG. 1, the receive end receives the packets through the transmission link 1 and the transmission link 2, performs normal processing (for example, further forwarding) on the packets that are received first, and discards the duplicate packets that are subsequently received. The duplicate packets are packets with a same sequence number. For example, after receiving a packet numbered 2 through the transmission link 1, the receive end determines, based on a sequence number carried in the packet, that the packet is received for the first time. Therefore, the receive end performs normal processing on the packet. Subsequently, after receiving a packet numbered 2 through the transmission link 2, the receive end determines, based on a sequence number of the packet, that the packet is not received for the first time, that is, determines that the packet has been received through the transmission link 1. Therefore, the receive end discards the packet numbered 2 received through the transmission link 2. In this redundancy manner, it can be ensured that even if a packet loss occurs on a transmission link between the transmit end and the receive end, the receive end can still receive a packet through another transmission link between the receive end and the transmit end. In this way, reliability of packet transmission can be improved, thereby reducing a transmission delay caused by packet retransmission due to the packet loss.

The transmit end and the receive end of the dual-fed and selective receiving network may be referred to as doubly attached nodes (doubly attached nodes, DANs). The DAN is a node having at least two transmit ports, so that the DAN can directly transmit traffic through the two transmit ports.

In related technical protocols, technical protocols that can implement dual-fed and selective receiving include but are not limited to a high-availability seamless redundancy (high-availability seamless redundancy, HSR) protocol or a parallel redundancy protocol (parallel redundancy protocol, PRP). That is, the dual-fed and selective receiving network may be a network using the HSR protocol (denoted as an HSR network), or a network using PRP (denoted as a PRP network), which is not limited thereto.

It should be understood that a principle and an implementation process of multi-fed and selective receiving are the same as those of dual-fed and selective receiving, and details are not described again.

### (2) HSR and HSR network

HSR is an Ethernet network protocol defined in chapter 5 of the international electrotechnical commission (international electrotechnical commission, IEC) standard 62439-3, and is mainly applied to data transmission scenarios with high reliability requirements (such as a substation control message transmission scenario and a motion control message transmission scenario).

An HSR network is a network implementing redundancy based on an HSR technology. The HSR network is typically used in a ring topology or another mesh topology, and therefore, the HSR network may also be referred to as an HSR ring. A node in the HSR network may be referred to as a doubly attached node implementing an HSR protocol (doubly attached node implementing HSR, DANH). Each DANH includes two Ethernet ports (hereinafter referred to as HSR ports), and each HSR port is connected to an adjacent DANH. Therefore, two paths always exist between two DANHs to implement redundancy backup of network links. A singly attached node (singly attached node, SAN) is connected to the HSR network through a redundancy box (redundancy box, REDBOX). The REDBOX functions as a DANH.

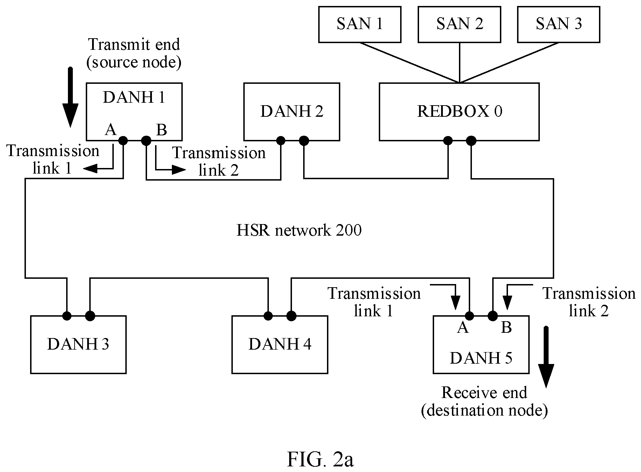

FIG. 2a is a diagram of transmitting a packet by using an HSR network. As shown in FIG. 2a, the HSR network 200 includes a DANH 1, a DANH 2, a DANH 3, a DANH 4, a DANH 5, and a node REDBOX 0, and the REDBOX 0 is configured to connect an SAN 1, an SAN 2, and an SAN 3 to the HSR network 200. An example in which a packet 100 received by the DANH 1 from outside the HSR network 200 shown in FIG. 2a or a packet 100 generated by the DANH 1 is a packet that needs to be transmitted through the HSR network 200, and a destination node of the packet 100 is the DANH 5 shown in FIG. 2a or a node, outside the HSR network 200, connected to the DANH 5 is used. In this case, the DANH 1 may be referred to as a transmit end or a source node of the packet 100 in the HSR network 200, and the DANH 5 may be referred to as a receive end or a destination node of the packet 100 in the HSR network 200.

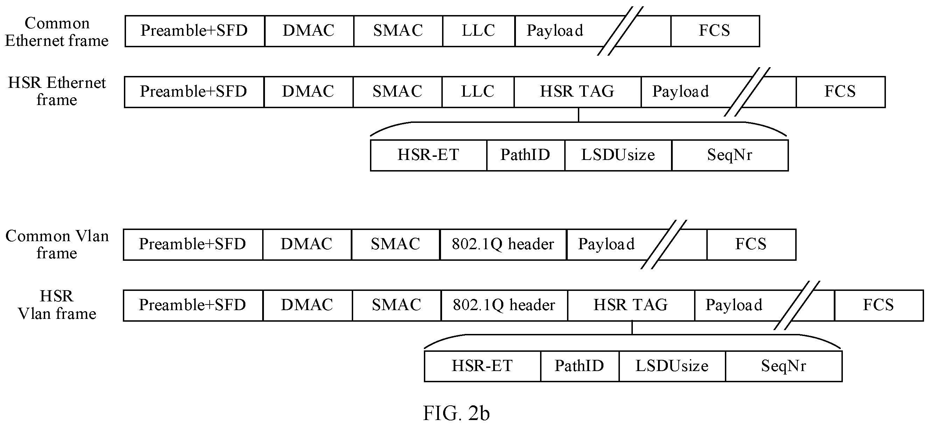

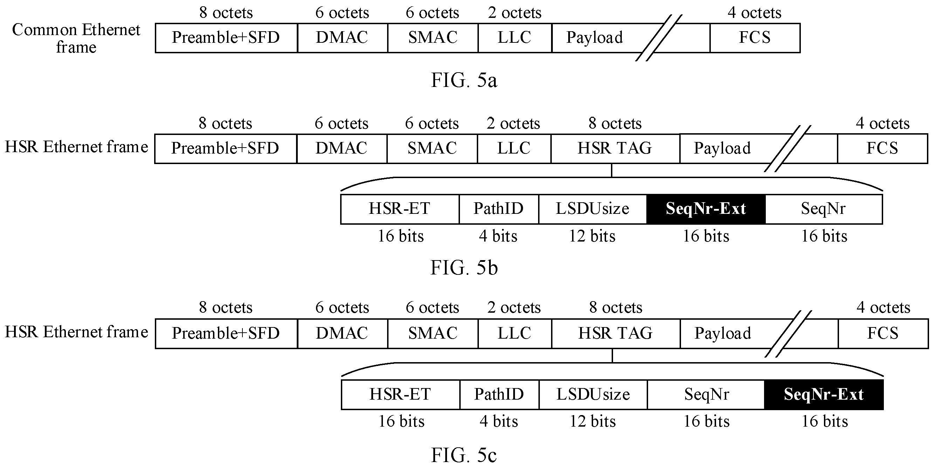

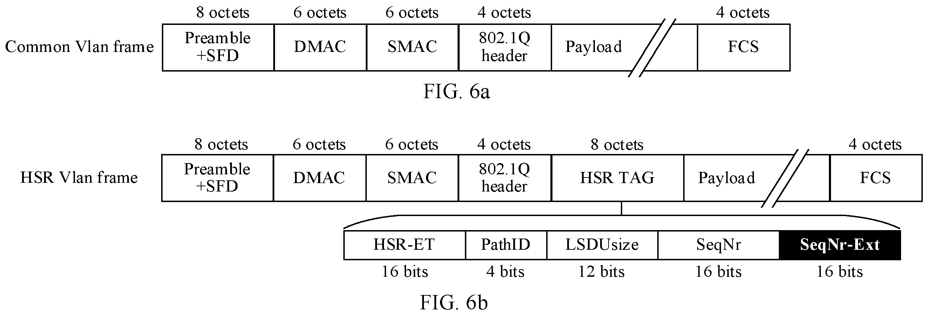

In this case, after obtaining the packet 100, the DANH 1 duplicates the packet 100, and adds HSR tag (TAG) fields with a same sequence number respectively to the packet 100 and a duplicate packet of the packet 100. The sequence number is carried in a 2-byte sequence number (sequence number, SeqNr) field in the HSR TAG field defined in the IEC standard 62439-3. A packet obtained by adding the HSR TAG field to the packet 100 is denoted as a packet 101, and a packet obtained by adding the HSR TAG field to the duplicate packet of the packet 100 is denoted as a packet 102. In this embodiment of this application, a packet obtained by adding the HSR TAG field is referred to as an HSR packet, that is, both the packet 101 and the packet 102 are HSR packets. FIG. 2b is a diagram of a format of an HSR packet. An example in which a packet that needs to be transmitted through the HSR network is the packet 100 is used. In an example, when a format of the packet 100 is a "common Ethernet frame" shown in FIG. 2b, a format of an HSR packet obtained by adding an HSR TAG field to the packet 100 is an "HSR Ethernet frame" shown in FIG. 2b. In another example, when a format of the packet 100 is a "common virtual local area network (virtual local area network, Vlan) frame" shown in FIG. 2b, a format of an HSR packet obtained by adding an HSR TAG field to the packet 100 is an "HSR Vlan frame" shown in FIG. 2b. For detailed definitions of the "common Ethernet frame", the "common Vlan frame", and fields in the HSR TAG field shown in FIG. 2b, refer to related descriptions in FIG. 5a to FIG. 5c or FIG. 6a and FIG. 6b below. Details are not described herein.

Then, the DANH 1 sends the packet 101 through an HSR port A connected to a transmission link 1, and transmits the packet 101 through the transmission link 1 passing through the DANH 3 and the DANH 4. The DANH 1 further sends the packet 102 through an HSR port B connected to a transmission link 2, and transmits the packet 102 through the transmission link 2 passing through the REDBOX 0. When the DANH 5 first receives the packet 101 through the HSR port A connected to the transmission link 1, and the DANH 5 determines, based on a destination address of the packet 101, that the DANH 5 is a destination node of the packet 101 in the HSR network 200, the DANH 5 performs subsequent processing on the packet 101 when further determining, based on the sequence number carried in the HSR TAG field in the packet 101, that the packet 101 is a packet received for the first time that includes the sequence number, for example, the DANH 5 removes the HSR TAG field from the packet 101 to obtain the packet 100, and forwards the packet 100 to a back-end node outside the HSR network 200. This process is named as the HSR packet leaving the HSR ring. When the DANH 5 subsequently receives the packet 102 through the HSR port B connected to the transmission link 2, and the DANH 5 determines, based on a destination address of the packet 102, that the DANH 5 is a destination node of the packet 102 in the HSR network 200, the DANH 5 discards the packet 102 when further determining, based on the sequence number carried in the HSR TAG field in the packet 102, that the packet 102 is not a packet received for the first time that includes the sequence number (that is, the packet 102 is a duplicate packet).

In some examples, the packet 100 is a multicast packet. In this case, when the DANH 5 receives the packet 101 and determines, based on a multicast address of the packet 101, that the DANH 5 is a destination node of the packet 101 in the HSR network 200, the DANH 5 performs subsequent processing on the packet 101 when further determining, based on the sequence number carried in the HSR TAG field in the packet 101, that the packet 101 is a packet received for the first time that includes the sequence number. In addition, the DANH 5 further continues to forward the packet 101 in the HSR network 200. In this case, based on a structure of the HSR ring in the HSR network, the packet 101 may return to the DANH 1 again. In this case, after receiving the packet 101, the DANH 1 may determine, based on a source address of the packet 101, that the packet 101 is a packet sent by the DANH 1, and the DANH 1 discards the packet 101.

In some other examples, when the destination node of the packet 100 is the SAN 1, after the REDBOX 0 receives the packet 102 through the transmission link 2, when the REDBOX 0 determines, based on a destination address of the packet 102, that the REDBOX 0 is a destination node of the packet 102 in the HSR network 200, the REDBOX 0 further removes, when determining, based on the sequence number carried in the HSR TAG field in the packet 102, that the packet 102 is a packet currently received for the first time that includes the sequence number, the HSR TAG field from the packet 102 to obtain the packet 100 and forwards the packet 100 to the SAN 1. In addition, after the REDBOX 0 receives the packet 101 through the transmission link 1, when the REDBOX 0 determines, based on the destination address of the packet 101, that the REDBOX 0 is the destination node of the packet 101 in the HSR network 200, the REDBOX 0 discards the packet 101 when further determining, based on the sequence number carried in the HSR TAG field in the packet 101, that the packet 101 is not a packet received for the first time that includes the sequence number (that is, the packet 101 is a duplicate packet).

It may be understood that, at the receive end in the HSR network, a process in which the receive end discards the duplicate packet based on the sequence number carried in the received packet is also referred to as a process of performing packet deduplication based on the sequence number.

In the HSR network, because packets can be transmitted to a destination node through two different transmission links, it can be ensured that when one transmission link (for example, the transmission link 1 shown in FIG. 2a) fails or a node on the transmission link fails, the packets can still be transmitted to the destination node through another transmission link (for example, the transmission link 2 shown in FIG. 2a). In this way, zero packet loss can be implemented during packet transmission, that is, reliability of packet transmission is improved.

### (3) PRP and PRP network

PRP is an Ethernet network protocol defined in chapter 4 of the IEC standard 62439-3. A transmit end mainly transmits, in parallel through at least two logically and/or physically separated switching networks (for example, a local area network (local area network, LAN) A and a LAN B), packets including same data. Therefore, when receiving the packets transmitted through the at least two switching networks, a receive end normally processes the packet that received first, and discards the duplicate packet that is subsequently received. In this way, reliability of packet transmission can be improved, thereby reducing a transmission delay caused by packet retransmission due to packet loss.

An PRP network is a network implementing redundancy based on an PRP technology. A node in a PRP network may also be referred to as a doubly attached node implementing PRP (doubly attached node implementing PRP, DANP). In a specific implementation, each DANP implements redundancy by connecting two Ethernet ports (hereinafter referred to as PRP ports) to two logically or physically independent switching networks (for example, the LAN A and the LAN B). Therefore, each DANP has a redundant path to another DAHP. An SAN is connected to the PRP network through a REDBOX. The REDBOX functions as the DANP.

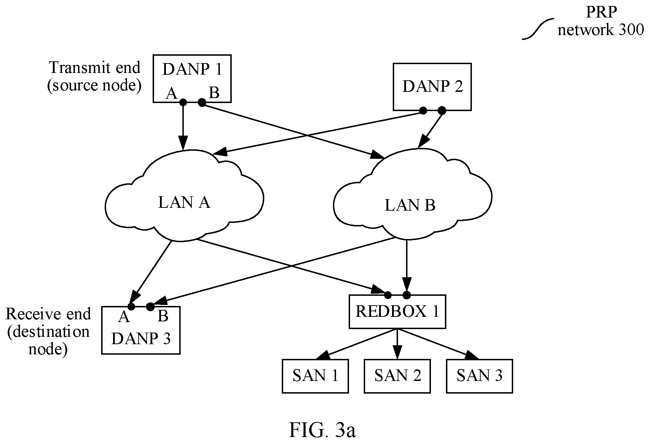

FIG. 3a is a diagram of transmitting a packet according to PRP. As shown in FIG. 3a, a PRP network 300 includes a DANP 1, a DANP 1, a DANP 3, a node REDBOX 1, a LAN A, and a LAN B, and the REDBOX 1 is configured to connect an SAN 1, an SAN 2, and an SAN 3 to the PRP network 300. An example in which a packet 200 received by the DANP 1 shown in FIG. 3a or a packet 200 generated by the DANP 1 needs to be transmitted through the PRP network 300, and a destination node of the packet 200 is the DANP 3 shown in FIG. 3a or a node, outside the PRP network 300, connected to the DANP 3. In this case, the DANP 1 may be referred to as a transmit end or a source node of the packet 200 in the PRP network 300, the DANP 3 may be referred to as a receive end or a destination node of the packet 200 in the PRP network 300.

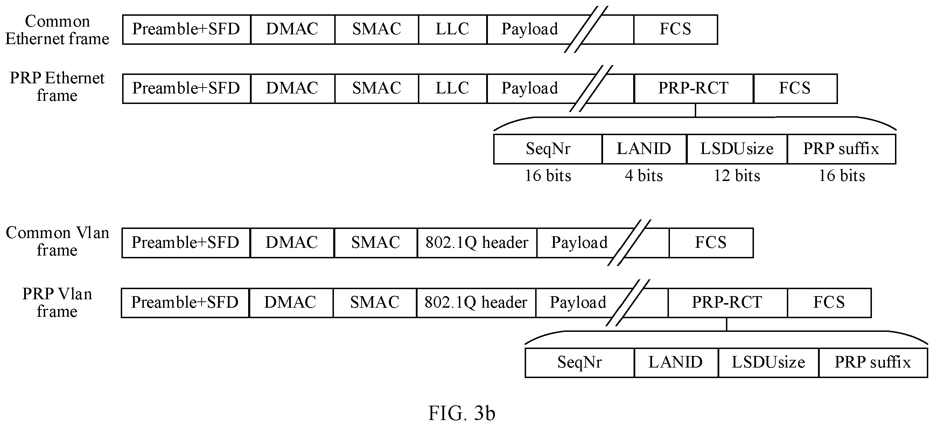

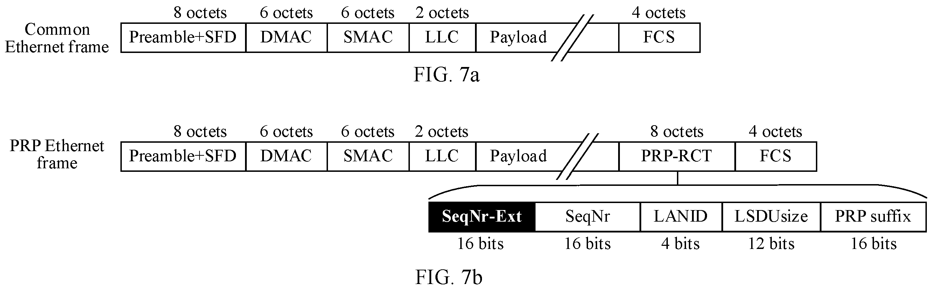

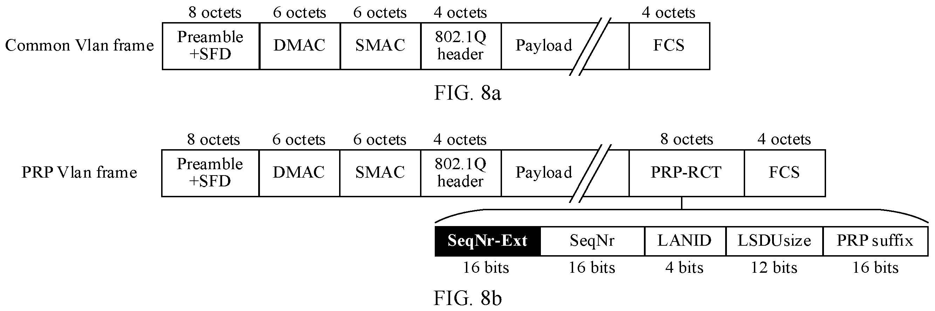

In this case, after obtaining the packet 200, the DANP 1 duplicates the packet 200, and adds PRP tags (also referred to as a redundancy control trailer (redundancy control trailer, RCT) (denoted as a PRP-RCT) fields) with a same sequence number respectively to the packet 200 and a duplicate packet of the packet 200. The sequence number is carried in a 2-byte SeqNr field in a PRP-RCT field defined in the IEC standard 62439-3. A packet obtained by adding the PRP-RCT field to the packet 200 is denoted as a packet 201, and a packet obtained by adding the PRP-RCT field to the duplicate packet of the packet 200 is denoted as a packet 202. In this embodiment of this application, a packet obtained by adding the PRP-RCT field is referred to as a PRP packet, that is, both the packet 201 and the packet 202 are PRP packets. FIG. 3b is a diagram of a format of a PRP packet. An example in which a packet that needs to be transmitted through the PRP network is the packet 200 is used. In an example, when a format of the packet 200 is a "common Ethernet frame" shown in FIG. 3b, a format of a PRP packet obtained by adding a PRP-RCT field to the packet 200 is a "PRP Ethernet frame" shown in FIG. 3b. In another example, when a format of the packet 200 is a format of a "common Vlan frame" shown in FIG. 3b, a format of a PRP packet obtained by adding the PRP-RCT field to the packet 200 is a "PRP Vlan frame" shown in FIG. 3b. For detailed definitions of the "common Ethernet frame", the "common Vlan frame", and fields in the PRP-RCT field shown in FIG. 3b, refer to the following related descriptions in FIG. 7a and FIG. 7b or FIG. 8a and FIG. 8b. Details are not described herein.

Then, the DANP 1 sends the packet 201 through a PRP port A connected to the LAN A, and transmits the packet 201 through the LAN A. The DANP 1 further sends the packet 202 through a PRP port B connected to the LAN B, and transmits the packet 202 through the LAN B. When the DANP 3 first receives the packet 201 through the PRP port A connected to the LAN A, and the DANP 3 determines, based on a destination address of the packet 201, that the DANP 3 is a destination node of the packet 201 in the PRP network 300, the DANP 3 performs subsequent processing on the packet 201 when further determining, based on the sequence number carried in the PRP-RCT field in the packet 201, that the packet 201 is a packet currently received for the first time that includes the sequence number, for example, the DANP 3 removes the PRP-RCT field from the packet 201 to obtain the packet 200, and forwards the packet 200 to a back-end node outside the PRP network 300. When the DANP 3 subsequently receives the packet 202 through the PRP port B connected to the LAN B, and the DANP 3 determines, based on a destination address of the packet 202, that the DANP 3 is a destination node of the packet 202 in the PRP network 300, the DANP 3 discards the packet 202 when further determining, based on the sequence number carried in the PRP-RCT field in the packet 202, that the packet 202 is not a packet received for the first time that includes the sequence number (that is, the packet 202 is a duplicate packet).

In some examples, when the destination node of the packet 200 is the SAN 2, after the REDBOX 1 receives the packet 201 from the PRP port connected to the LAN A, when the REDBOX 1 determines, based on a destination address of the packet 201, that the REDBOX 1 is a destination node of the packet 201 in the PRP network, the REDBOX 1 removes, when further determining, based on the sequence number carried in the PRP-RCT field in the packet 201, that the packet 201 is a packet currently received for the first time that includes the sequence number, the PRP-RCT field from the packet 201 to obtain the packet 200 and forwards the packet 200 to the SAN 2. After the REDBOX 1 receives the packet 202 from the PRP port connected to the LAN B, when the REDBOX 1 determines, based on a destination address of the packet 202, that the REDBOX 1 is a destination node of the packet 202 in the PRP network, the REDBOX 1 discards the packet 202 when further determining, based on the sequence number carried in the PRP-RCT field in the packet 202, that the packet 202 is not a packet received for the first time that includes the sequence number (that is, the packet 202 is a duplicate packet).

It may be understood that, at the receive end in the PRP network, a process in which the receive end discards the duplicate packet based on the sequence number carried in the received packet is also referred to as a process of performing packet deduplication based on the sequence number.

In the PRP network, because packets can be transmitted to a destination node in parallel through at least two logically and/or physically separated switching networks, it can be ensured that when a communication link or node in a switching network (the LAN A shown in FIG. 3a) fails, the packets can still reach the destination node through another switching network (the LAN B shown in FIG. 3a). In this way, zero packet loss can be implemented during packet transmission, that is, reliability of packet transmission is improved.

In related technologies, when dual-fed and selective receiving/multi-fed and selective receiving is implemented, the transmit end sets aging time for each sequence number added to a to-be-transmitted packet, and adds the sequence number to another to-be-transmitted packet upon expiration of the aging time. In this way, dual/multiple transmission of packets can be continuously performed. At the receive end, the receive end sets aging time for a sequence number carried in each received packet, and determines, within the aging time based on the sequence number, whether a subsequently received packet is a duplicate packet of a received packet.

However, in related technologies, because a length of a field that is added by the transmit end to the packet and that is used for carrying the sequence number is limited, aging time set by the transmit end and the receive end for each sequence number is short. When a large quantity of packets are transmitted at a large bandwidth, during packet receiving, the receive end may receive a duplicate packet of a received packet only after the aging time set for the sequence number carried in the received packet expires. In this case, the duplicate packet cannot be discarded because the aging time has expired. In other words, in related technologies, the receive end may not deduplicate received packets due to short aging time, causing a waste of resources at the receive end.

Based on this, an embodiment of this application provides a packet transmission method. In the method, a length of a sequence number field in a packet is extended to increase maximum aging time set for the sequence number, thereby effectively avoiding a case in which a receive end cannot deduplicate received packets due to short aging time, and avoiding a waste of resources at the receive end.

Optionally, the packet (for example, the following to-be-transmitted packet) in this embodiment of this application includes but is not limited to a common Ethernet frame, a common virtual local area network (virtual local area network, Vlan) frame, a common internet protocol (internet protocol, IP) frame, and the like. This is not limited herein.

The method provided in embodiments of this application may be applied to but is not limited to implementation environments shown in FIG. 1, FIG. 2a, and FIG. 3a. It should be understood that the examples of the implementation environments shown in FIG. 1, FIG. 2a, and FIG. 3a do not constitute a limitation on an implementation environment of the method provided in embodiments of this application. A person of ordinary skill in the art may learn that, with a change of a service requirement, an implementation environment of the method provided in embodiments of this application may be adjusted based on an application requirement. Examples are not listed one by one in embodiments of this application.

An embodiment of this application further provides a packet transmission system. The system is configured to implement the packet transmission method provided in embodiments of this application, to implement multi-fed and selective receiving (for example, dual-fed and selective receiving) of packets. In an example, the system may be the dual-fed and selective receiving network system shown in FIG. 1, or the HSR network system shown in FIG. 2a, or the PRP network system shown in FIG. 3a, which is not limited thereto.

The foregoing packet transmission system includes a transmit end supporting multi-fed and selective receiving, a receive end supporting multi-fed and selective receiving, and a transmission network including the transmit end and the receive end. The transmit end and the receive end in the system may be any compute device that has a computational processing capability and/or a packet forwarding processing capability. For example, the transmit end and the receive end in the system include but are not limited to the foregoing DAN, DANH, DANP, REDBOX, and the like. For another example, the transmit end and the receive end in the system include but are not limited to a terminal-side device having a multi-fed and selective receiving function or a proxy device of the terminal-side device. The terminal-side device may be, for example, a machine tool, a mechanical arm, or an industrial control device in an industrial scenario. This is not limited herein.

An embodiment of this application further provides a packet transmission apparatus. The apparatus is configured to perform the packet transmission method provided in embodiments of this application. The apparatus is used in a transmit end or a receive end in the foregoing packet transmission system, and is configured to perform corresponding steps performed by the transmit end and the receive end in the method in embodiments of this application. Optionally, the apparatus is any compute device that has a computational processing capability and/or a packet forwarding processing capability, or is a functional module in the compute device. This is not limited herein. For example, the compute device includes but is not limited to the foregoing DAN, DANH, DANP, REDBOX, and the like. For another example, the compute device includes but is not limited to a terminal-side device that supports a dual-fed and selective receiving function or a proxy device of the terminal-side device. The terminal-side device may be, for example, a machine tool, a mechanical arm, or an industrial control device in an industrial scenario. This is not limited herein.

The following describes an implementation process of a packet transmission method provided in embodiments of this application.

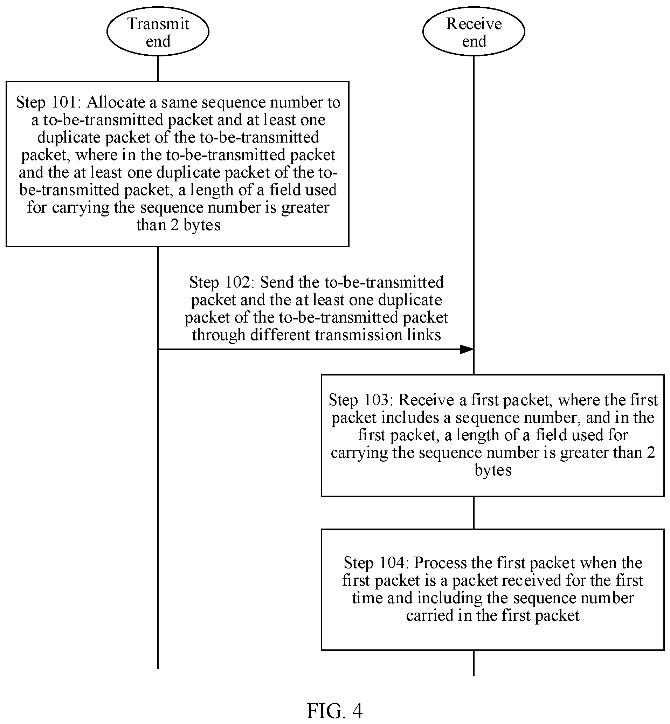

FIG. 4 is a schematic flowchart of a packet transmission method according to an embodiment of this application. For example, the method may be applied to the implementation environment shown in FIG. 1, FIG. 2a, or FIG. 3a, and the transmit end and the receive end in FIG. 1, FIG. 2a, or FIG. 3a perform corresponding steps. As shown in FIG. 4, the method includes the following steps.

Step 101: The transmit end allocates a same sequence number to a to-be-transmitted packet and at least one duplicate packet of the to-be-transmitted packet, where in the to-be-transmitted packet and the at least one duplicate packet of the to-be-transmitted packet, a length of a field used for carrying the sequence number is greater than 2 bytes.

The sequence number allocated by the transmit end to the to-be-transmitted packet and the at least one duplicate packet of the to-be-transmitted packet is used for deduplication when the to-be-transmitted packet and the at least one duplicate packet of the to-be-transmitted packet are received.

In some embodiments, when the transmit end implements an HSR protocol and/or PRP defined in the IEC standard 62439-3, in the to-be-transmitted packet and the at least one duplicate packet of the to-be-transmitted packet, the field used for carrying the sequence number allocated by the transmit end is a field obtained by extending a sequence number (sequence number, SeqNr) field defined in the IEC standard 62439-3. The extended field includes an extended sequence number (extended sequence number, SeqNr-Ext) field and the SeqNr field defined in the IEC standard 62439-3.

For example, when the transmit end implements the HSR protocol defined in the IEC standard 62439-3, in the to-be-transmitted packet and the at least one duplicate packet of the to-be-transmitted packet, the field used for carrying the sequence number allocated by the transmit end includes the SeqNr-Ext field and a 2-byte SeqNr field in an HSR TAG field defined in the IEC standard 62439-3.

For another example, when the transmit end implements PRP defined in the IEC standard 62439-3, in the to-be-transmitted packet and the at least one duplicate packet of the to-be-transmitted packet, the field used for carrying the sequence number allocated by the transmit end includes the SeqNr-Ext field and a 2-byte SeqNr field in a PRP-RCT field defined in the IEC standard 62439-3.

A length of the SeqNr field defined in the IEC standard 62439-3 is 2 bytes, or is referred to as 2 octets (octets) (denoted as 2 octets). In addition, a length of the SeqNr-Ext field is not specifically limited in this embodiment of this application. For example, the length of the SeqNr-Ext field may be 1 octet, 2 octets, 4 octets, or the like, which is not limited thereto.

It should be understood that a value range of the sequence number added by the transmit end to the to-be-transmitted packet and the duplicate packet can be indicated by a length of a field carrying the sequence number. For example, when the length of the SeqNr field is 2 octets, and the length of the SeqNr-Ext field is 2 octets, a value range of the sequence number is 0 to 232, that is, 0 to 4294967295. That is, the transmit end may add different sequence numbers to 4294967296 to-be-transmitted packets, to perform multi-fed and selective receiving on the 4294967296 packets.

For example, after obtaining the to-be-transmitted packet, the transmit end duplicates the to-be-transmitted packet, and separately adds a same sequence number to the to-be-transmitted packet and a duplicate packet of the to-be-transmitted packet. It should be understood that the sequence number is an available sequence number in a sequence number range indicated by the SeqNr-Ext field and the SeqNr field. The available sequence number is a sequence number whose aging time has expired. For detailed descriptions, refer to the following descriptions. Details are not described.

A quantity of duplicate packets of the to-be-transmitted packet is the same as a quantity of packets sent when the transmit end supports multi-fed and selective receiving of packets, or is the same as a quantity of transmit ports configured for the transmit end to send packets during multi-fed and selective receiving of packets. For example, when the transmit end is a DAN (for example, a DANH or a DANP), it indicates that two transmit ports that are configured to send packets during multi-fed and selective receiving of packets are configured for the transmit end. In this case, after obtaining the to-be-transmitted packet, the transmit end duplicates the to-be-transmitted packet to obtain one duplicate packet. In this case, the transmit end performs dual transmission on the to-be-transmitted packets. For another example, when the transmit end has three transmit ports configured to send packets during multi-fed and selective receiving of packets, after obtaining the to-be-transmitted packet, the transmit end duplicates the to-be-transmitted packet to obtain two duplicate packets. In this case, the transmit end performs triple transmission on the to-be-transmitted packets.

In a possible case, the transmit end implements the HSR protocol defined in the IEC standard 62439-3. In this case, the transmit end adds the HSR TAG field to the to-be-transmitted packet and the duplicate packet of the to-be-transmitted packet. The HSR TAG field includes the SeqNr field and the SeqNr-Ext field that are used for carrying the sequence number. That is, both the to-be-transmitted packet and the duplicate packet of the to-be-transmitted packet that carry the sequence number allocated by the transmit end include the HSR TAG field, and the HSR TAG field includes the SeqNr field and the SeqNr-Ext field that are used for carrying the sequence number.

In another possible case, the transmit end implements PRP defined in the IEC standard 62439-3. In this case, the transmit end adds the PRP-RCT field to the to-be-transmitted packet and the duplicate packet of the to-be-transmitted packet, and the PRP-RCT field includes the SeqNr field and the SeqNr-Ext field that are used for carrying the sequence number. That is, both the to-be-transmitted packet and the duplicate packet of the to-be-transmitted packet that carry the sequence number allocated by the transmit end include the PRP-RCT field, and the PRP-RCT field includes the SeqNr field and the SeqNr-Ext field that are used for carrying the sequence number.

A position of the SeqNr-Ext field in the HSR TAG field/PRP-RCT field is not specifically limited in this embodiment of this application. For example, in the HSR TAG field/PRP-RCT field, the SeqNr-Ext field may be before the SeqNr field, or may be after the SeqNr field. This is not limited. For another example, in the HSR TAG field/PRP-RCT field, the SeqNr-Ext field and the SeqNr field may be adjacent or may not be adjacent. This is not limited herein.

That the SeqNr-Ext field is before the SeqNr field means that an HSR Ethertype (HSR Ethertype, HSR-ET) field in the HSR TAG field or a PRP suffix (suffix) field in the PRP-RCT field is used as a start position, and a distance from the SeqNr-Ext field to the start position is less than a distance from the SeqNr field to the start position. In this case, it indicates that a decoding order of the SeqNr-Ext field precedes that of the SeqNr field. Similarly, that the SeqNr-Ext field is after the SeqNr field means that the HSR-ET field in the HSR TAG field or the PRP suffix field in the PRP-RCT field is used as a start position, and a distance from the SeqNr-Ext field to the start position is greater than a distance from the SeqNr field to the start position. In this case, it indicates that the decoding order of the SeqNr-Ext field is after that of the SeqNr field. For detailed descriptions of the HSR-ET field and the PRP suffix field, refer to the following descriptions. Details are not described herein.

In addition, in the HSR TAG field/PRP-RCT field, a most significant byte and a least significant byte of the sequence number represented by the SeqNr-Ext field and the SeqNr field are not specifically limited in this embodiment of this application. For example, in this embodiment of this application, based on the decoding order of the SeqNr-Ext field and the decoding order of the SeqNr field in the HSR TAG field/PRP-RCT field, a field with an earlier decoding order is used to represent a most significant byte of the sequence number, and a field with a later decoding order is used to represent a least significant byte of the sequence number. For another example, in this embodiment of this application, based on the decoding order of the SeqNr-Ext field and the decoding order of the SeqNr field in the HSR TAG field/PRP-RCT field, a field with an earlier decoding order is used to represent a least significant byte of the sequence number, and a field with a later decoding order is used to represent a most significant byte of the sequence number.

The following describes, by using specific examples, a format of a packet obtained by adding the SeqNr-Ext field and the SeqNr field by the transmit end to the to-be-transmitted packet.

Example 1: The transmit end implements the HSR protocol defined in the IEC standard 62439-3, the to-be-transmitted packet is a common Ethernet frame, and the length of the SeqNr-Ext field is preset to 2 octets. FIG. 5a to FIG. 5c each are a diagram of a format of a packet before and after addition of an HSR TAG field according to an embodiment of this application.

As shown in FIG. 5a, when the HSR TAG field is not added to a to-be-transmitted packet, a format of the to-be-transmitted packet is a common Ethernet frame, including: a preamble field of 7 octets, a start-of-frame delimiter (start-of-frame delimiter, SFD) field of 1 octet, a destination media access control (destination media access control, DMAC) address field of 6 octets, a source MAC (source MAC, SMAC) address field of 6 octets, a logical link control (logical link control, LLC) field of 2 octets, a payload (payload) field, and a frame check sequence (frame check sequence, FCS) field of 4 octets. The payload field is specific data carried in the packet. For detailed definitions of the preamble field, the SFD field, the DMAC address field, the SMAC address field, the LLC field, and the FCS field, refer to related technical descriptions. Details are not described.

As shown in FIG. 5b, after the HSR TAG field is added to the to-be-transmitted packet having the frame format shown in FIG. 5a, an Ethernet frame (denoted as an HSR Ethernet frame) to which the HSR TAG field is added includes: a preamble field of 7 octets, an SFD field of 1 octet, a DMAC address field of 6 octets, an SMAC address field of 6 octets, an LLC field of 2 octets, an HSR TAG field of 8 octets, a payload field, and an FCS field of 4 octets. The HSR TAG field includes an HSR Ethertype (HSR EtherType, HSR-ET) field of 16 bits (bits), a path identifier (path identifier, pathID) field of 4 bits, a link service data unit size (link service data unit size, LSDUsize) field of 12 bits, a SeqNr-Ext field of 16 bits, and a SeqNr field of 16 bits.

The HSR-ET field indicates that an Ethertype of a current frame is an HSR type, or indicates that the current frame carries the HSR TAG field. In related technologies, the HSR-ET field is set to a fixed value 0x892F.

The pathID field includes a network (net) ID field and a port ID field.

When the communication network includes a plurality of HSR networks having a shared node, netID is used for distinguishing different HSR networks, to avoid forming a loop after a to-be-transmitted packet enters the HSR network. In some embodiments, different values of netID may be used for distinguishing whether the to-be-transmitted packet enters the HSR network for first time, enters a current HSR network from another HSR network, or enters the current HSR network from a PRP network, and so on. In an example, a length of the netID field is 3 bits, so that eight network situations can be distinguished.

A port ID indicates a transmit port that sends the to-be-transmitted packet and the duplicate packet of the to-be-transmitted packet. For example, a length of the port ID is 1 bit, which can indicate two transmit ports, supporting dual transmission of packets. With reference to FIG. 2a, when the DANH 1 sends a packet through the HSR port A connected to the transmission link 1, a value of the port ID is "0"; and when the DANH 1 sends a packet through the HSR port B connected to the transmission link 2, a value of the port ID is "1".

With reference to the foregoing descriptions, in an example, two HSR ports of a REDBOX are respectively a port A and a port B. When a to-be-transmitted packet from an SAN enters the REDBOX of the HSR network, the REDBOX may set netID of pathID in the HSR TAG field added to the to-be-transmitted packet to "000". In this case, when a port ID of the port A is set to "0", and a port ID of the port B is set to "1", pathID in the HSR TAG field added by the REDBOX to the to-be-transmitted packet sent through the port A is "0000", and pathID in the HSR TAG field added by the REDBOX to the to-be-transmitted packet sent through the port B is "0001".

In another example, two HSR ports of a DAN of the current HSR network are respectively a port A and a port B. When a to-be-transmitted packet enters the DAN of the current HSR network from another HSR network or the PRP network, the DAN may set netID of pathID in the HSR TAG field added to the to-be-transmitted packet to a value ranging from "001" to "111", for example, "010". In this case, when a port ID of the port A is set to "0", and a port ID of the port B is set to "1", pathID in the HSR TAG field added by the DAN to the to-be-transmitted packet sent through the port A is a value in "0100", and pathID in the HSR TAG field added by the DAN to the to-be-transmitted packet sent through the port B is a value in "0101".

The LSDUsize field indicates a length from the pathID field to the end of the payload field.

The SeqNr-Ext field and the SeqNr field are jointly used for carrying the sequence number allocated by the transmit end to the to-be-transmitted packet.

As shown in FIG. 5c, after the HSR TAG field is added to the to-be-transmitted packet having the frame format shown in FIG. 5a, a structure of an HSR Ethernet frame to which the HSR TAG field is added is similar to the structure of the HSR Ethernet frame shown in FIG. 5b. The only difference lies in that the SeqNr field is after the SeqNr-Ext field in the HSR TAG field of the HSR Ethernet frame shown in FIG. 5b, and the SeqNr field is before the SeqNr-Ext field in the HSR TAG field of the HSR Ethernet frame shown in FIG. 5c.

It should be understood that, when the SeqNr field in the HSR TAG field is before the SeqNr-Ext field, the receive end decodes the SeqNr field and the SeqNr-Ext field in the HSR TAG field in the following decoding orders: A decoding order of the SeqNr field precedes that of the SeqNr-Ext field. In this case, when the SeqNr-Ext field is used for carrying a most significant byte of the sequence number, the SeqNr field is used for carrying a least significant byte of the sequence number, and each most significant byte of the sequence number is 0, the HSR Ethernet frame having the packet structure shown in FIG. 5c can be identified and processed by a device that implements the HSR protocol defined in the IEC standard 62439-3. That is, in this case, the structure of the HSR Ethernet frame shown in FIG. 5c is compatible with dual-fed and selective receiving implemented according to the HSR protocol defined in the IEC standard 62439-3. It can be learned that, when a position of the SeqNr-Ext field is set in the HSR TAG field according to FIG. 5c, compatibility of the method provided in this embodiment of this application can be improved.

Example 2: The transmit end implements the HSR protocol defined in the IEC standard 62439-3, the to-be-transmitted packet is a common Vlan frame, and the length of the SeqNr-Ext field is preset to 2 octets. FIG. 6a and FIG. 6b each are a diagram of another format of a packet before and after addition of an HSR TAG field according to an embodiment of this application.

As shown in FIG. 6a, when the HSR TAG field is not added to a to-be-transmitted packet, a format of the to-be-transmitted packet is a common Vlan frame, including: a preamble field of 7 octets, an SFD field of 1 octet, a DMAC address field of 6 octets, a source MAC address field of 6 octets, an 802.1Q header (header) field of 4 octets, a payload field, and an FCS field of 4 octets. For detailed definitions of the preamble field, the SFD field, the DMAC address field, the SMAC address field, the 802.1Q header field, the payload, and the FCS field, refer to related technical descriptions. Details are not described.

As shown in FIG. 6b, after the HSR TAG field is added to the to-be-transmitted packet having the frame format shown in FIG. 6a, a Vlan frame (denoted as an HSR Vlan frame) to which the HSR TAG field is added includes: a preamble field of 7 octets, an SFD field of 1 octet, a DMAC address field of 6 octets, an SMAC address field of 6 octets, an 802.1Q header field of 4 octets, an HSR TAG field of 8 octets, a payload field, and an FCS field of 4 octets. The HSR TAG field includes an HSR-ET field of 16 bits, a pathID field of 4 bits, an LSDUsize field of 12 bits, a SeqNr field of 16 bits, and a SeqNr-Ext field of 16 bits. For detailed descriptions of the fields in the HSR TAG field, refer to related descriptions in FIG. 5a to FIG. 5c. Details are not described again. In this case, when the SeqNr-Ext field shown in FIG. 6b is used for carrying a most significant byte of the sequence number, the SeqNr field is used for carrying a least significant byte of the sequence number, and each most significant byte of the sequence number is 0, it indicates that a structure of the HSR Vlan frame shown in FIG. 6b is compatible with dual-fed and selective receiving implemented according to the HSR protocol defined in the IEC standard 62439-3.

Certainly, in the HSR TAG field of the HSR Vlan frame, the SeqNr field may alternatively be after the SeqNr-Ext field. In this case, it indicates that a decoding order of the SeqNr field is after that of the SeqNr-Ext field. This is not limited herein.

Example 3: The transmit end implements PRP defined in the IEC standard 62439-3, the to-be-transmitted packet is a common Ethernet frame, and the length of the SeqNr-Ext field is preset to 2 octets. FIG. 7a and FIG. 7b each are a diagram of a format of a packet before and after addition of a PRP-RCT field according to an embodiment of this application.

As shown in FIG. 7a, when the PRP-RCT field is not added to a to-be-transmitted packet, a format of the to-be-transmitted packet is a common Ethernet frame format. For details, refer to the common Ethernet frame format shown in FIG. 5a.

As shown in FIG. 7b, after the PRP-RCT field is added to the to-be-transmitted packet having the frame format shown in FIG. 7a, an Ethernet frame (denoted as a PRP Ethernet frame) to which the PRP-RCT field is added includes: a preamble field of 7 octets, an SFD field of 1 octet, a DMAC address field of 6 octets, an SMAC address field of 6 octets, an LLC field of 2 octets, a payload field, a PRP-RCT field of 8 octets, and an FCS field of 4 octets. The PRP-RCT field includes a SeqNr-Ext field of 16 bits, a SeqNr field of 16 bits, a LANID field of 4 bits, an LSDUsize field of 12 bits, and a PRP suffix (suffix) field of 16 bits.

The SeqNr-Ext field and the SeqNr field are jointly used for carrying the sequence number allocated by the transmit end to the to-be-transmitted packet.

The LANID field indicates an ID of a switching network connected to a DANP or a REDBOX that sends the to-be-transmitted packet. With reference to FIG. 3a, when the DANP 1 sends a packet through the PRP port A connected to the LAN A, a value of LANID is "1010"; and when the DANP 1 sends a packet through the PRP port B connected to the LAN B, a value of LANID is "1011".

The LSDUsize field indicates a length from the payload field to the end of the LSDUsize field.

The PRP suffix field indicates that a type of a current frame is a PRP type, or indicates that the current frame carries the PRP-RCT field. In related technologies, the PRP suffix field is set to a fixed value 0x88FB.

Based on the PRP-RCT field shown in FIG. 7b, the SeqNr field is located before the SeqNr-Ext field. In this case, it indicates that a decoding order of the SeqNr field precedes that of the SeqNr-Ext field. When the SeqNr field is used for carrying a least significant byte of the sequence number, the SeqNr-Ext field is used for carrying a most significant byte of the sequence number, and each most significant byte of the sequence number is 0, it indicates that a structure of the PRP Ethernet frame shown in FIG. 7b is compatible with dual-fed and selective receiving implemented according to PRP defined in the IEC standard 62439-3. It can be learned that, when a position of the SeqNr-Ext field is set in the PRP-RCT field according to FIG. 7b, compatibility of the method provided in this embodiment of this application can be improved.

Certainly, in the PRP-RCT field of the PRP Ethernet frame provided in this embodiment of this application, the SeqNr field may also be after the SeqNr-Ext field. In this case, it indicates that a decoding order of the SeqNr field is after that of the SeqNr-Ext field. This is not limited herein.

Example 4: The transmit end implements PRP defined in the IEC standard 62439-3, the to-be-transmitted packet is a common Vlan frame, and the length of the SeqNr-Ext field is preset to 2 octets. FIG. 8a and FIG. 8b each are a diagram of another format of a packet before and after addition of a PRP-RCT field according to an embodiment of this application.

As shown in FIG. 8a, when the PRP-RCT field is not added to a to-be-transmitted packet, a format of the to-be-transmitted packet is a common Vlan frame format. For details, refer to the common Vlan frame format shown in FIG. 6a.

As shown in FIG. 8b, after the PRP-RCT field is added to the to-be-transmitted packet having the frame format shown in FIG. 8a, a Vlan frame (denoted as a PRP Vlan frame) to which the PRP-RCT field is added includes: a preamble field of 7 octets, an SFD field of 1 octet, a DMAC address field of 6 octets, an SMAC address field of 6 octets, an 802.1Q header field of 4 octets, a payload field, a PRP-RCT field of 8 octets, and an FCS field of 4 octets. The PRP-RCT field includes a SeqNr-Ext field of 16 bits, a SeqNr field of 16 bits, a LANID field of 4 bits, an LSDUsize field of 12 bits, and a PRP suffix field of 16 bits. For detailed descriptions of the fields in the PRP-RCT field, refer to related descriptions in FIG. 7a and FIG. 7b. Details are not described again. In this case, when the SeqNr-Ext field shown in FIG. 8b is used for carrying a most significant byte of the sequence number, the SeqNr field is used for carrying a least significant byte of the sequence number, and each most significant byte of the sequence number is 0, it indicates that a structure of the PRP Vlan frame shown in FIG. 8b is compatible with dual-fed and selective receiving implemented according to PRP defined in the IEC standard 62439-3.

Certainly, in the HSR TAG field of the HSR Vlan frame, the SeqNr field may also be after the SeqNr-Ext field. In this case, it indicates that a decoding order of the SeqNr field is after that of the SeqNr-Ext field. This is not limited herein.

Further, after adding, to the to-be-transmitted packet and the duplicate packet of the to-be-transmitted packet, the sequence number carried by both the SeqNr field and the SeqNr-Ext field, the transmit end generates a corresponding flow entry for the sequence number in a flow table. The flow entry includes the sequence number added to the to-be-transmitted packet (and the duplicate packet of the to-be-transmitted packet). In addition, the transmit end sets aging time (for example, sets an aging timer) for the sequence number in the flow entry. In this way, upon expiration of the aging time of the sequence number, the transmit end may allocate the sequence number and add the sequence number to another to-be-transmitted packet.

A specific value of the aging time that is set by the transmit end for the sequence number in the flow entry is not specifically limited in this embodiment of this application, provided that the aging time is within maximum aging time determined by the transmit end based on a transmit bandwidth of the transmit end. In some examples, assuming that a bandwidth of a port of the transmit end is 1 gigabyte (gigabyte, GB), and an average size of packets sent by the transmit end is 64 bytes (bytes, B), a quantity of packets that can be sent by the transmit end per second=1024 megabytes (megabytes, MB)/(64+12+8)/8=1.48 MB/seconds. "12+8" is a sum of a length of inter-frame information, a length of the preamble field, and a length of the SFD field. Further, because a maximum quantity of sequence numbers indicated by the SeqNr field and the SeqNr-Ext field whose lengths are 4 octets in total is 4294967296, maximum aging time of a sequence number in 1 GB bandwidth=4294967296/1.48 MB/s=2902 seconds. In comparison with a case in which maximum aging time of a sequence number in 1 GB bandwidth is 65536/1.48 MB/s=44 ms when a maximum quantity of sequence numbers indicated by a SeqNr field whose length is 2 octets is 65536 in related technologies, the maximum aging time in the solution in this embodiment of this application is far longer than the maximum aging time in the related technologies. Therefore, in this embodiment of this application, when the transmit end sends packets at full bandwidth, the aging time set by the transmit end for each sequence number does not exceed the maximum aging time, and the transmit end has sufficient sequence numbers to allocate to each to-be-transmitted packet. In addition, at the receive end, when aging time set by the receive end for each sequence number is the maximum aging time, in enough long aging time, the receive end may deduplicate received packets based on a sequence number that is not aged.

Step 102: The transmit end sends the to-be-transmitted packet and the at least one duplicate packet of the to-be-transmitted packet through different transmission links.

The transmit end sends, through a transmit port indicated by a related field carried in each of the to-be-transmitted packet and the at least one duplicate packet, a packet through a transmission link connected to the transmit port.

For example, in a dual-fed and selective receiving scenario of the HSR network, the transmit end sends, through a transmit port indicated by a pathID field in the HSR TAG field carried in the to-be-transmitted packet, the to-be-transmitted packet through a first transmission link connected to the transmit port. The transmit end further sends, through a transmit port indicated by a pathID field in the HSR TAG field carried in the duplicate packet of the to-be-transmitted packet, the duplicate packet through a second transmission link connected to the transmit port.

For another example, in a multi-fed and selective receiving (for example, dual-fed and selective receiving) scenario of the PRP network, the transmit end sends, through a transmit port indicated by a LANID field in the PRP-RCT field carried in the to-be-transmitted packet, the to-be-transmitted packet through a first transmission link connected to the transmit port. The transmit end further sends, through a transmit port indicated by a LANID field in the PRP-RCT field carried in the duplicate packet of the to-be-transmitted packet, the duplicate packet through a second transmission link connected to the transmit port.

A manner of forwarding the to-be-transmitted packet on the first transmission link and a manner of forwarding the duplicate packet of the to-be-transmitted packet on the second transmission link are not specifically limited in this embodiment of this application. For example, the forwarding manner may be layer 2 (layer 2, L2) forwarding or layer 3 (layer 3, L3) forwarding. This is not limited herein.

In addition, in a multi-fed and selective receiving (for example, dual-fed and selective receiving) scenario of the PRP network, neither a network structure of a first subnet in which the first transmission link is located nor a network structure of a second subnet in which the second transmission link is located is specifically limited in this embodiment of this application. For example, the network structure of the first subnet includes but is not limited to a tree structure, and the network structure of the second subnet includes but is not limited to a ring structure.

Step 103: The receive end receives a first packet, where the first packet includes a sequence number, and in the first packet, a length of a field used for carrying the sequence number is greater than 2 bytes.

The receive end supports multi-fed and selective receiving functions. For example, when the transmit end is a DANH or a REDBOX in the HSR network, the receive end is the DANH or the REDBOX in the HSR network. Alternatively, when the transmit end is a DANP or a REDBOX in the PRP network, the receive end is the DANP or the REDBOX in the PRP network, and so on. This is not limited.

The receive end receives the first packet through a receive port of the receive end. In some embodiments, in the first packet, fields used for carrying the sequence number are the SeqNr field and the SeqNr-Ext field described above. For detailed descriptions, refer to related descriptions in step 101.

For example, the first packet may be the "to-be-transmitted packet" sent by the transmit end through the first transmission link, or the "duplicate packet of the to-be-transmitted packet" sent by the transmit end through the second transmission link. This is not limited herein.

Further, after receiving the first packet, the receive end first determines that the receive end is a destination node of the first packet in a multi-fed and selective receiving network. For example, the receive end determines whether a destination address of the first packet is an address of the receive end, or determines whether the destination address of the first packet is an address of a back-end device connected to the receive end, to determine whether the receive end is the destination node of the first packet in the multi-fed and selective receiving network.

When the receive end determines that the receive end is not the destination node of the first packet in the multi-fed and selective receiving network, the receive end forwards the first packet in the multi-fed and selective receiving network based on the destination address of the first packet.

When the receive end determines that the receive end is the destination node of the first packet in the multi-fed and selective receiving network, the receive end performs step 104.

Step 104: The receive end processes the first packet when the first packet is a packet received for the first time and including the sequence number carried in the first packet.

When determining that the receive end is the destination node of the first packet in the multi-fed and selective receiving network, the receive end decodes the first packet to obtain the sequence number carried in the first packet.

In a possible case, when no node shared with another multi-fed and selective receiving network exists in the current multi-fed and selective receiving network (for example, no shared node exists between a current HSR network and another HSR network), the receive end queries the flow table based on the sequence number obtained by decoding the first packet, to determine whether a flow entry including the sequence number exists in the flow table. The flow table includes at least one flow entry, and each flow entry is used for recording a sequence number carried in a packet that has been received by the receive end. Optionally, each flow entry is further used for recording a source address (for example, a source MAC address) of a packet that has been received by the receive end.

When the receive end traverses the flow table and determines that the flow entry including the sequence number does not exist in the flow table, the receive end determines that the first packet is a packet received by the receive end for first time and including the sequence number. In this case, the receive end deletes, from the first packet, the related field used for carrying the sequence number, and performs subsequent processing on the first packet, for example, performs related service processing based on the first packet, or forwards the first packet. This is not limited herein. For example, when the receive end is the DANH or the REDBOX in the HSR network, the receive end deletes an HSR TAG field from the first packet, and performs subsequent processing on the first packet. For another example, when the receive end is the DANP or the REDBOX in the PRP network, the receive end deletes a PRP-RCT field from the first packet, and performs subsequent processing on the first packet.

In addition, after the receive end determines, by traversing the flow table, that the flow entry including the sequence number does not exist in the flow table, the receive end adds, to the flow table, the flow entry including the sequence number carried in the first packet, and sets aging time for the flow entry. It should be understood that after the aging time of the flow entry expires, the receive end may delete the flow entry or set the flow entry to be invalid, to release a corresponding resource. Optionally, the flow entry that added by the receive end to the flow table and including the sequence number carried in the first packet, further includes a source address (for example, a source MAC address) of the first packet. This is not limited herein.

In another possible case, when a node shared with another multi-fed and selective receiving network exists in the current multi-fed and selective receiving network (for example, a shared node exists between a current HSR network and another HSR network), the receive end queries the flow table based on the sequence number extracted from the first packet and a source address of the first packet, to determine whether the flow entry including the sequence number and the source address exists in the flow table. In this case, each flow entry in the flow table is used for recording a source address (for example, a source MAC address) of a packet received by the receive end and a sequence number carried in the packet.

This is because, when a node shared with another multi-fed and selective receiving network exists in the current multi-fed and selective receiving network, the shared node may forward packets of nodes in different multi-fed and selective receiving networks. Because nodes in different multi-fed and selective receiving networks add sequence numbers to packets independently, packets forwarded by the shared node that are from different multi-fed and selective receiving networks may carry a same sequence number. Therefore, in this case, the receive end needs to query the flow table based on the sequence number extracted from the first packet and the source address of the first packet, to determine whether the flow entry including the sequence number and the source address exists in the flow table.

When the receive end traverses the flow table and determines that the flow entry including the sequence number and the source address does not exist in the flow table, the receive end determines that the first packet is a packet received by the receive end for first time and including the sequence number and the source address. In this case, the receive end deletes, from the first packet, the related field used for carrying the sequence number, and performs subsequent processing on the first packet, for example, performs related service processing based on the first packet, or forwards the first packet. This is not limited herein. In addition, the receive end adds, to the flow table, the flow entry including the source address of the first packet and the sequence number carried in the first packet, and sets aging time for the flow entry. It should be understood that after the aging time of the flow entry expires, the receive end may delete the flow entry or set the flow entry to be invalid, to release a corresponding resource.

Subsequently, the receive end receives a second packet. When the receive end determines, in the foregoing manner of traversing the flow table, that the second packet includes the sequence number carried in the first packet, it indicates that the receive end determines that the second packet is a duplicate packet of the first packet. Therefore, the receive end discards the second packet.

For example, when the receive end traverses the flow table by using a sequence number carried in the second packet (or by using a source address and the carried sequence number of the second packet), and the flow table includes the sequence number carried in the second packet (or includes the sequence number carried in the second packet and the source address of the second packet), the receive end determines that the second packet includes the sequence number carried in the first packet. Details are not described.

In this case, according to the method described in step 101 to step 104, in this application, a length of a field, in a packet sent by the transmit end in the multi-fed and selective receiving network, used for carrying a sequence number is increased (that is, the SeqNr-Ext field is increased), to increase a quantity of available sequence numbers, thereby expanding a sequence number range. Further, based on an increased length of the field used for carrying the sequence number, maximum aging time in the solution in embodiments of this application is far greater than maximum aging time in related technologies. Therefore, in this embodiment of this application, when the transmit end sends packets at full bandwidth, the aging time set by the transmit end for each sequence number does not exceed the maximum aging time, and the transmit end has sufficient sequence numbers to allocate to each to-be-transmitted packet. In addition, at the receive end, when aging time set by the receive end for each sequence number is the maximum aging time, in enough long aging time, the receive end may deduplicate the received packets based on a sequence number that is not aged.

The foregoing mainly describes the solutions provided in embodiments of this application from the perspective of the methods.

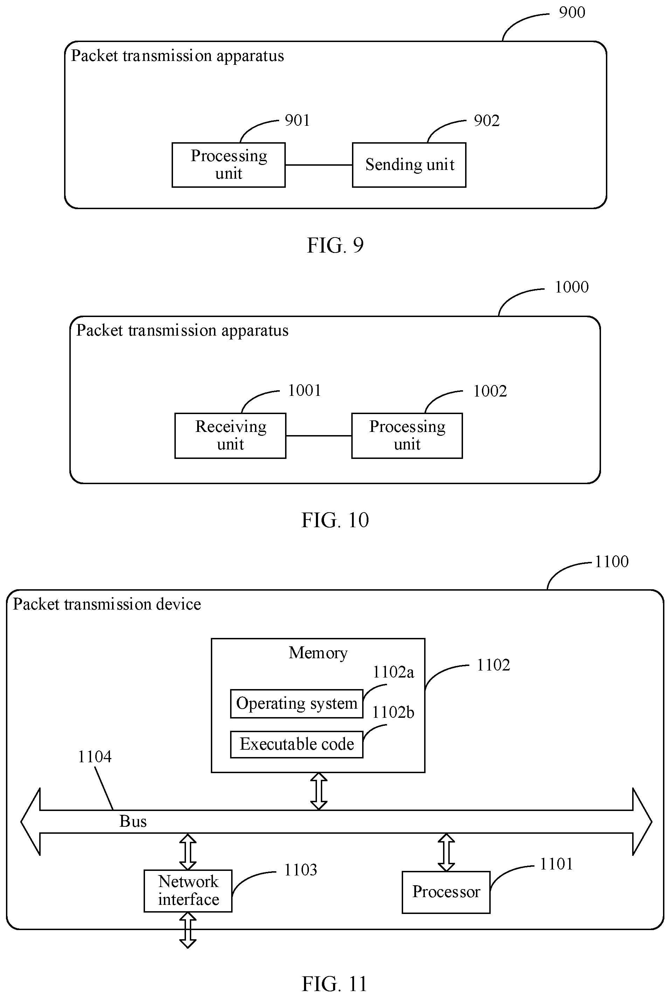

To implement the foregoing functions, FIG. 9 is a diagram of a structure of a packet transmission apparatus according to an embodiment of this application. The packet transmission apparatus 900 is use in a transmit end, and is configured to perform a part performed by the transmit end in the foregoing packet transmission method, for example, configured to perform a part performed by the transmit end in the method shown in FIG. 4. The packet transmission apparatus 900 may include a processing unit 901 and a sending unit 902.

The processing unit 901 is configured to allocate a same sequence number to a to-be-transmitted packet and at least one duplicate packet of the to-be-transmitted packet. The sending unit 902 is configured to send the to-be-transmitted packet and the at least one duplicate packet of the to-be-transmitted packet through different transmission links. In the to-be-transmitted packet and the at least one duplicate packet of the to-be-transmitted packet, a length of a field used for carrying a sequence number is greater than 2 bytes.

For example, with reference to FIG. 4, the processing unit 901 may be configured to perform step 101, and the sending unit 902 may be configured to perform step 102.

Optionally, the field used for carrying the sequence number includes a SeqNr-Ext field and a 2-byte SeqNr field in an HSR TAG field or a PRP-RCT field defined in the IEC standard 62439-3.

Optionally, a decoding order of the SeqNr field precedes that of the SeqNr-Ext field, the SeqNr-Ext field is used for carrying a most significant byte of the sequence number, and the SeqNr field is used for carrying a least significant byte of the sequence number.

Optionally, in the method in this embodiment of this application, when two-party selective receiving is performed based on an HSR technology, the to-be-transmitted packet and the at least one duplicate packet of the to-be-transmitted packet each include an HSR TAG field in the HSR protocol, and the HSR TAG field includes the SeqNr-Ext field and the SeqNr field defined in the standard.

Optionally, in the method in this embodiment of this application, when two-party selective receiving is performed based on a PRP technology, the to-be-transmitted packet and the at least one duplicate packet of the to-be-transmitted packet each include a PRP-RCT field in PRP, and the PRP-RCT field includes the SeqNr-Ext field and the SeqNr field defined in the standard.

Optionally, the transmit end is a doubly attached node implementing an HSR protocol and/or a PRP (such as a DANH and a DANP) or a REDBOX.

For detailed descriptions of the foregoing optional implementations, refer to the foregoing method embodiments. Details are not described herein again. In addition, for descriptions of any packet transmission apparatus 900 provided above and descriptions of beneficial effects, refer to the foregoing corresponding method embodiments. Details are not described again.

For example, with reference to FIG. 11 described below, functions implemented by the processing unit 901 in the packet transmission apparatus 900 may be implemented by a processor 1101 in FIG. 11 by executing program code in a memory 1102 in FIG. 11. Functions implemented by the sending unit 902 in the packet transmission apparatus 900 may be implemented through a network interface 1103 shown in FIG. 11.

FIG. 10 is a diagram of a structure of another packet transmission apparatus according to an embodiment of this application. The packet transmission apparatus 1000 is used in a receive end, and is configured to perform a part performed by the receive end in the foregoing packet transmission method, for example, configured to perform a part performed by the receive end in the method shown in FIG. 4. The packet transmission apparatus 1000 may include a receiving unit 1001 and a processing unit 1002.

The receiving unit 1001 is configured to receive a first packet including a sequence number. The processing unit 1002 is configured to process the first packet when the first packet is a packet received for the first time and including the sequence number. In the first packet, a length of a field used for carrying the sequence number is greater than 2 bytes.

For example, with reference to FIG. 4, the receiving unit 1001 may be configured to perform step 103, and the processing unit 1002 may be configured to perform step 104.

Optionally, the receiving unit 1001 is further configured to receive a second packet after receiving the first packet. The processing unit 1002 is further configured to discard the second packet when the second packet includes the sequence number carried in the first packet.

Optionally, the field used for carrying the sequence number includes a SeqNr-Ext field and a 2-byte SeqNr field in an HSR TAG field or a PRP-RCT field defined in the IEC standard 62439-3.

Optionally, a decoding order of the SeqNr field precedes that of the SeqNr-Ext field, the SeqNr-Ext field is used for carrying a most significant byte of the sequence number, and the SeqNr field is used for carrying a least significant byte of the sequence number.

Optionally, in the method in this embodiment of this application, when two-party selective receiving is performed based on an HSR technology, the first packet and the second packet each include an HSR TAG field in the HSR protocol, and the HSR TAG field includes the SeqNr-Ext field and the SeqNr field defined in the standard.

Optionally, in the method in this embodiment of this application, when two-party selective receiving is performed based on a PRP technology, the first packet and the second packet each include a PRP-RCT field in PRP, and the PRP-RCT field includes the SeqNr-Ext field and the SeqNr field defined in the standard.

Optionally, the receive end is a doubly attached node implementing an HSR protocol and/or PRP (such as a DANH and a DANP) or a REDBOX.

For detailed descriptions of the foregoing optional implementations, refer to the foregoing method embodiments. Details are not described herein again. In addition, for descriptions of any packet transmission apparatus 1000 provided above and descriptions of beneficial effects, refer to the foregoing corresponding method embodiments. Details are not described again.

For example, with reference to FIG. 11 described below, functions implemented by the receiving unit 1001 in the packet transmission apparatus 1000 may be implemented through a network interface 1103 shown in FIG. 11. Functions implemented by the processing unit 1002 in the packet transmission apparatus 1000 may be implemented by a processor 1101 in FIG. 11 by executing program code in a memory 1102 in FIG. 11.

A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

It should be noted that division into modules/units in FIG. 9 or FIG. 10 is an example, is merely logical function division, and may be other division during actual implementation. For example, two or more functions may be integrated into one processing module. The integrated module may be implemented in the form of hardware, or may be implemented in a form of a software functional module.

An embodiment of this application provides a packet transmission device. The foregoing packet transmission apparatus is used in the packet transmission device. For example, the packet transmission apparatus is the packet transmission device, or a functional module/component in the packet transmission device. This is not limited herein. Therefore, the packet transmission device can be configured to implement some or all functions of the packet transmission method provided in embodiments of this application. For example, the packet transmission device is used as the transmit end described above, or is used as the receive end described above.

An example in which the packet transmission apparatus is the packet transmission device is used. FIG. 11 is a diagram of a structure of a packet transmission device according to an embodiment of this application. As shown in FIG. 11, the packet transmission device 1100 includes a processor 1101, a memory 1102, a network interface 1103, and a bus 1104. The processor 1101, the memory 1102, and the network interface 1103 implement mutual communication connections through the bus 1104.

The processor 1101 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU) or a multi-core processor (multi-CPU). The dedicated hardware chip is a hardware module capable of performing high-performance processing. The dedicated hardware chip includes but is not limited to at least one of a digital signal processor (digital signal processor, DSP), a data processing unit (data processing unit, DPU), an application-specific integrated circuit (application-specific integrated circuit, ASIC), a field-programmable logic gate array (field-programmable gate array, FPGA), another programmable logic device, a discrete gate or transistor logic device, a discrete hardware component, a neural processing unit (neural processing unit, NPU), a tensor processing unit (tensor processing unit, TPU), an artificial intelligence (artificial intelligent) chip, or a network processor (network processor, NP). The processor 1101 may be an integrated circuit chip and has a signal processing capability. In an implementation process, some or all functions of the method in embodiments of this application may be implemented by using an integrated logic circuit of hardware in the processor 1101 or instructions in the form of software.

The memory 1102 is configured to store a computer program, and the computer program includes an operating system 1102a and executable code (that is, program instructions) 1102b. The memory 1102 is, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a flash memory, another type of static storage device that can store static information and instructions, a random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), another type of dynamic storage device that can store information and instructions, a read-only disc or other optical disc storage, an optical disc storage (including a compact disc, a laser disc, an optical disc, a digital versatile disc, a Blu-ray disc, and the like), a magnetic disk storage medium, another magnetic storage device, or any other medium that can be used for carrying or storing expected executable code in a form of an instruction or a data structure and that can be accessed by a computer. This is not limited thereto. For example, the memory 1102 is configured to store the flow table described above. For example, the memory 1102 exists independently, and is connected to the processor 1101 through the bus 1104. Alternatively, the memory 1102 may be integrated with the processor 1101. The memory 1102 may store executable code. When the executable code stored in the memory 1102 is executed by the processor 1101, the processor 1101 is configured to perform some or all functions of the packet transmission method provided in embodiments of this application. For an implementation of performing the process by the processor 1101, accordingly refer to related descriptions in the foregoing embodiments. The memory 1102 may further include another software module, such as an operating system, or data for running a process.

The network interface 1103 uses a transceiver module, for example, but not limited to a transceiver, to implement communication with another device or a communication network. For example, the network interface 1103 may be any one or any combination of the following components having a network access function: a network interface (for example, an Ethernet interface) or a wireless network interface card. The network interface 1103 includes a receiving unit configured to receive data/a packet and a sending unit configured to send data/a packet.

The bus 1104 is a communication bus of any type, and is configured to implement interconnection between internal components (for example, the memory 1102, the processor 1101, and the network interface 1103) of the packet transmission device 1100, for example, a system bus. In this embodiment of this application, an example in which the foregoing components in the packet transmission device 1100 are interconnected through the bus 1104 is used for description. Optionally, the foregoing components in the packet transmission device 1100 may be communicatively connected to each other in another connection manner other than the bus 1104. For example, the foregoing components in the packet transmission device 1100 are interconnected through an internal logical interface.

It should be noted that the foregoing plurality of components may be separately disposed on chips independent of each other, or at least some or all of the components may be disposed on a same chip. Whether the components are independently disposed on different chips or integrated and disposed on one or more chips usually depends on a requirement of a product design. This embodiment of this application imposes no limitation on specific implementations of the foregoing components. Descriptions of procedures corresponding to the foregoing accompanying drawings have respective focuses. For a part that is not described in detail in a procedure, refer to related descriptions of other procedures.

All or some of the foregoing embodiments may be implemented by using software, hardware, firmware, or any combination thereof. When software is used to implement the embodiments, all or a part of the embodiments may be implemented in a form of a computer program product. A computer program product that provides a program development platform includes one or more computer instructions. When the computer program instructions are loaded and executed on the packet transmission device 1100, all or some of the functions of the packet transmission method provided in embodiments of this application are implemented.

The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

An embodiment of this application further provides a packet transmission system. The system includes the transmit end and the receive end described above. The transmit end is configured to perform a part performed by the transmit end in the foregoing packet transmission method, for example, configured to perform a part performed by the transmit end in the method shown in FIG. 4. The receive end is configured to perform a part performed by the receive end in the foregoing packet transmission method, for example, configured to perform a part performed by the receive end in the method shown in FIG. 4.

An embodiment of this application further provides a computer-readable storage medium. The computer-readable storage medium is a non-volatile computer-readable storage medium. The computer-readable storage medium includes computer program instructions. When the computer program instructions are executed by a compute device, a computer system, a processor, or the foregoing packet transmission apparatus/device, the compute device, the computer system, the processor, or the foregoing packet transmission apparatus/device performs the packet transmission method provided in embodiments of this application.

An embodiment of this application further provides a computer program product including instructions. When the instructions are run by a compute device, a computer system, a processor, or the foregoing packet transmission apparatus/device, the compute device, the computer system, the processor, or the foregoing packet transmission apparatus/device is caused to implement the packet transmission method provided in embodiments of this application.

The computer system is a system having a computing processing capability. The computer system generally includes a processor and a memory. The processor is configured to invoke, from the memory, and run instructions stored in the memory, so that the computer system implements the foregoing packet transmission method. Optionally, the computer system may further include at least one of an input interface or an output interface. The processor, the memory, the input interface, and the output interface of the computer system are connected by using an internal connection path.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions.

An embodiment of this application further provides a chip. The chip includes a processor configured to run program instructions or code. The chip or a device including the chip may be configured to perform the packet transmission method provided in embodiments of this application. For example, the chip further includes an input interface, an output interface, and a memory. The input interface, the output interface, the processor, and the memory of the chip are connected by using an internal connection path of the chip. The memory in the chip is configured to store program instructions or code run by the processor. The input interface and the output interface of the chip are configured to connect and communicate with another chip or device.

In embodiments of this application, the terms "first", "second", and "third" are merely used for description, but cannot be understood as an indication or implication of relative importance. The term "at least one" refers to one or more, and the term "a plurality of" refers to a plurality of, unless otherwise specified.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be understood that determining B based on A does not mean that B is determined based only on A, but B may alternatively be determined based on A and/or other information.

It should be understood that the term "include" (also referred to as "includes", "including", "comprises", and/or "comprising"), when used in this specification, specifies the presence of stated features, integers, steps, operations, elements, and/or components, but does not preclude presence or addition of one or more other features, integers, steps, operations, elements, components, and/or groups thereof.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

The foregoing descriptions are merely optional embodiments of this application, but are not intended to limit this application. Any modification, equivalent replacement, improvement, or the like made within the concept and principle of this application shall fall within the protection scope of this application.

## Claims

1. A packet transmission method, applied to a transmit end, wherein the method comprises:
allocating a same sequence number to a to-be-transmitted packet and at least one duplicate packet of the to-be-transmitted packet, wherein in the to-be-transmitted packet and the at least one duplicate packet of the to-be-transmitted packet, a length of a field used for carrying the sequence number is greater than 2 bytes; and
sending the to-be-transmitted packet and the at least one duplicate packet through different transmission links.

2. The method according to claim 1, wherein the field used for carrying the sequence number comprises an extended sequence number SeqNr-Ext field and a 2-byte sequence number SeqNr field, wherein the SeqNr field is contained in a high-availability seamless redundancy tag HSR TAG field or a parallel redundancy protocol-redundancy control trailer PRP-RCT field defined in the international electrotechnical commission IEC standard 62439-3.

3. The method according to claim 2, wherein a decoding order of the SeqNr field precedes that of the SeqNr-Ext field, the SeqNr-Ext field is used for carrying a most significant byte of the sequence number, and the SeqNr field is used for carrying a least significant byte of the sequence number.

4. The method according to any one of claims 1 to 3, wherein the transmit end is a doubly attached node implementing high-availability seamless redundancy DANH, a doubly attached node implementing a parallel redundancy protocol DANP, or a redundancy box REDBOX.

5. A packet transmission method, applied to a receive end, wherein the method comprises:
receiving a first packet, wherein the first packet comprises a sequence number, and in the first packet, a length of a field used for carrying the sequence number is greater than 2 bytes; and
processing the first packet when the first packet is a packet received for the first time and comprising the sequence number.

6. The method according to claim 5, wherein after the receiving the first packet, the method further comprises:
receiving a second packet; and
discarding the second packet when the second packet comprises the sequence number.

7. The method according to claim 5 or 6, wherein the field used for carrying the sequence number comprises an extended sequence number SeqNr-Ext field and a 2-byte sequence number SeqNr field, wherein the SeqNr field is contained in a high-availability seamless redundancy tag HSR TAG field or a parallel redundancy protocol-redundancy control trailer PRP-RCT field defined in the international electrotechnical commission IEC standard 62439-3.

8. The method according to claim 7, wherein a decoding order of the SeqNr field precedes that of the SeqNr-Ext field, the SeqNr-Ext field is used for carrying a most significant byte of the sequence number, and the SeqNr field is used for carrying a least significant byte of the sequence number.

9. The method according to any one of claims 5 to 8, wherein the receive end is a doubly attached node implementing high-availability seamless redundancy DANH, a doubly attached node implementing a parallel redundancy protocol DANP, or a redundancy box REDBOX.

10. A packet transmission apparatus, used in a transmit end, wherein the apparatus comprises:
a processing unit, configured to allocate a same sequence number to a to-be-transmitted packet and at least one duplicate packet of the to-be-transmitted packet, wherein in the to-be-transmitted packet and the at least one duplicate packet of the to-be-transmitted packet, a length of a field used for carrying the sequence number is greater than 2 bytes; and
a sending unit, configured to send the to-be-transmitted packet and the at least one duplicate packet through different transmission links.

11. The apparatus according to claim 10, wherein the field used for carrying the sequence number comprises an extended sequence number SeqNr-Ext field and a 2-byte sequence number SeqNr field, wherein the SeqNr field is contained in a high-availability seamless redundancy tag HSR TAG field or a parallel redundancy protocol-redundancy control trailer PRP-RCT field defined in the international electrotechnical commission IEC standard 62439-3.

12. The apparatus according to claim 11, wherein a decoding order of the SeqNr field precedes that of the SeqNr-Ext field, the SeqNr-Ext field is used for carrying a most significant byte of the sequence number, and the SeqNr field is used for carrying a least significant byte of the sequence number.

13. The apparatus according to any one of claims 10 to 12, wherein the transmit end is a doubly attached node implementing high-availability seamless redundancy DANH, a doubly attached node implementing a parallel redundancy protocol DANP, or a redundancy box REDBOX.

14. A packet transmission apparatus, used in a receive end, wherein the apparatus comprises:
a receiving unit, configured to receive a first packet, wherein the first packet comprises a sequence number, and in the first packet, a length of a field used for carrying the sequence number is greater than 2 bytes; and
a processing unit, configured to process the first packet when the first packet is a packet received for the first time and comprising the sequence number.

15. The apparatus according to claim 14, wherein
the receiving unit is further configured to receive a second packet after receiving the first packet; and
the processing unit is further configured to discard the second packet when the second packet comprises the sequence number.

16. The apparatus according to claim 14 or 15, wherein the field used for carrying the sequence number comprises an extended sequence number SeqNr-Ext field and a 2-byte sequence number SeqNr field, wherein the SeqNr field is contained in a high-availability seamless redundancy tag HSR TAG field or a parallel redundancy protocol-redundancy control trailer PRP-RCT field defined in the international electrotechnical commission IEC standard 62439-3.

17. The apparatus according to claim 16, wherein a decoding order of the SeqNr field precedes that of the SeqNr-Ext field, the SeqNr-Ext field is used for carrying a most significant byte of the sequence number, and the SeqNr field is used for carrying a least significant byte of the sequence number.

18. The apparatus according to any one of claims 14 to 17, wherein the receive end is a doubly attached node implementing high-availability seamless redundancy DANH, a doubly attached node implementing a parallel redundancy protocol DANP, or a redundancy box REDBOX.

19. A packet transmission apparatus, comprising: a memory, a network interface, and one or more processors, wherein the one or more processors receive or send data through the network interface, and the one or more processors are configured to read program instructions stored in the memory, to perform the method according to any one of claims 1 to 9.

20. A packet transmission system, comprising a transmit end and a receive end, wherein the transmit end is configured to perform the method according to any one of claims 1 to 4, and the receive end is configured to perform the method according to any one of claims 5 to 9.

21. A computer program product comprising instructions, wherein when the instructions are run by a compute device or a processor, the compute device or the processor is caused to perform the method according to any one of claims 1 to 9.

22. A computer-readable storage medium, comprising computer program instructions, wherein when the computer program instructions are executed by a compute device or a processor, the compute device or the processor performs the method according to any one of claims 1 to 9.
